# EUROPÄISCHE PATENTANMELDUNG

(11) **EP 2 015 255 A1**
(43) Veröffentlichungstag der Anmeldung: **14.01.2009**
(21) Anmeldenummer: 08008347.0
(22) Anmeldetag: 02.05.2008
(51) Int. Cl.: G06T 11/20

(54) **Einrichtung zur Ermittlung eines Anzeigebildes**

(30) Priorität: 13.07.2007 DE 102007032698
(71) Anmelder: Dr.Ing. H.C. F. Porsche Aktiengesellschaft, 70435 Stuttgart (DE)
(72) Erfinder: Seehaus, Timo, 71711 Steinheim (DE); Armand, Joerg, 75417 Muehlacker (DE); Schmelzer, Christian, 71229 Leonberg (DE); Boehlendorf, Alexander, 71065 Sindelfingen (DE)

(57) **Zusammenfassung**

Zur Schaffung eines übersichtlichen Anzeigebildes (55) für einen Fahrassistenzsystem, insbesondere ein Abstandserfassungssystem oder einen Parkassistenten, bedient ich das erfindungsgemäße Verfahren der Bestimmung von Bezier-Kurven, auf der Basis von Abstandserfassungswerten (8,15,23,24,25) auf verschiedenen Erfassungslinien (1,2,3,4,5), wobei bei der Modellbildung und Parametrisierung der Bezier-Kurven unter Berücksichtigung der jeweils vorliegenden Situation verschiedene Varianten für die Wahl der Stützstellen und der Kurvenrandpunkte zur Verfügung stehen. Es können auch zur Erzielung glatter Darstellungskurven unter bestimmten Bedingungen Objektpositionen (15,23) unberücksichtigt bleiben.

## Beschreibung

Die Erfindung liegt auf dem Gebiet der Automobiltechnik, genauer auf dem Gebiet der Fahrassistenzsysteme, die in modernen Fahrzeugen den Fahrer darin unterstützen, zunehmend komplexer werdende Verkehrs- und Fahrsituationen immer besser zu beherrschen.

Als derartige Fahrassistenzsysteme sind beispielsweise Geschwindigkeits- und Abstandswarn- und Regelsysteme, Brems- und Stabilitätsassistenzen, Lane-Departure-Systeme, Abstandswarnsysteme und Einparkhilfen bekannt.

Vielen dieser Systeme ist gemeinsam, dass durch Sensoren gewonnene Umfelddaten für den Fahrer in übersichtlicher Form dargestellt werden müssen.

Insbesondere auf dem Gebiet der Abstandswarnsysteme und Einparkhilfen sind hierzu Sensorsysteme mit Ultraschallwandlern oder Lidar- bzw. Radareinrichtungen zur Abstandsmessung bekannt, mit denen der Abstand des eigenen Fahrzeuges von Hindernissen oder anderen Verkehrsteilnehmern in verschiedenen Richtungen ermittelt werden kann.

Die vorliegende Erfindung beschäftigt sich insbesondere damit, Anzeigebilder, die für solche Systeme verwendet werden, komfortabel und übersichtlich zu erzeugen.

In der DE 102005033403 A1 ist ein Verfahren zur Entfernungsmessung mittels Radar, Lidar oder akustischen Wellen beschrieben, bei dem eine Echolaufzeit gemessen und ausgewertet wird. Um die Echolaufzeit genauer zu ermitteln, wird das reflektierte mit dem ausgesendeten Signal verglichen.

In der DE 19963755 A1 ist für Kraftfahrzeuge eine Vorrichtung zur Abstandsmessung beschrieben, bei der mehrere Abstandssensoren vorgesehen sind, die auf verschiedene Weise betrieben werden können, um die Qualität der Messungen zu verbessern.

Aus dem Stand der Technik ist in diesem Zusammenhang bekannt, beispielsweise in einer Anzeige schematisch ein Fahrzeug von oben darzustellen und um dieses herum radial vom Fahrzeug ausgehend verschiedene Erfassungsbalken anzuordnen, durch die der Abstand von Hindernissen angezeigt werden kann.

Der vorliegenden Erfindung liegt die Aufgabe zugrunde, derartige Anzeigen weiter zu verbessern.

Die Lösung der Aufgabe gelingt mit einem Verfahren gemäß Patentanspruch 1.

Dabei werden zur Erzeugung einer glatten, übersichtlichen Linie, die evtl. vorhandene Objekte angemessen repräsentiert, in an sich bekannter Weise Bezier-Kurven verwendet. Es können grundsätzlich auch andere Kurvenarten verwendet werden, die mithilfe von Stützpunkten und nach Anpassung bestimmter Parameter einen ausgeglichenen und den Bedürfnissen entsprechenden Verlauf bieten. Speziell Bezier-Kurven sind beim Erstellen von Graphiken aus der numerischen Mathematik seit längerem bekannt. Sie bedienen sich der sogenannten Berstein-Polynome, um geglättete Kurven darzustellen, sind durch wenige Parameter bestimmbar und gut handhabbar.

Es existieren Bezier-Kurven verschiedenen Grades in Abhängigkeit von der Anzahl der vorhandenen Stützstellen. Dabei ist eine Anzahl von Kurvenpunkten, im vorliegenden Fall Objektpositionen, gegeben, durch die die entstehende Kurve hindurchläuft sowie Kurvenrandpunkte, an denen sie endet.

Jeder Objektposition sind dabei zwei Bezier-Objekt-Stützstellen zugeordnet, deren Position grundsätzlich verschieden gewählt werden kann, wodurch die Gestalt der Kurve sich unter Beibehaltung der vorgegebenen Kurvenpunkte ändert.

Der Erfindungsidee liegt die Voraussetzung zugrunde, dass für eine Mehrzahl von Abstandssensoren, die an einem Fahrzeug verteilt sind, jeweils individuell Abstandserfassungswerte vorliegen, die konkrete Kurvenpunkte festlegen. Es hat sich herausgestellt, dass die Anordnung der Objektstützstellen und der Kurvenrandpunkte gemäß der Erfindung zu übersichtlichen und realistischen Darstellungen von jeweils erfassten Hindernissen und Begrenzungen führt.

Das erfindungsgemäße Verfahren ist dabei unabhängig von der Art und Anzahl der Sensoren, die für die Abstandserfassung einsetzbar sind.

Grundsätzlich ist der Einsatz von Ultraschallwandlern möglich, jedoch können auch Radar- und Lidar-Systeme eingesetzt werden, wobei die Sensoren auch nicht einzeln den Erfassungslinien gemäß der Erfindung zugeordnet sein müssen, wenn beispielsweise Kreuzechos ausgewertet werden oder Ähnliches.

Ausschlaggebend ist lediglich, dass Abstände von Objekten in bestimmten Richtungen vom Fahrzeug aus gesehen, die durch die Erfassungslinien gegeben sind, erfasst oder ermittelt werden können.

Diese Größen werden bei der Durchführung des erfindungsgemäßen Verfahrens als gegebene Objektpositionen oder Abstandserfassungswerte, von virtuell festliegenden Sensorpositionen aus betrachtet, vorausgesetzt.

Zu dem Zweck verfügt die Einrichtung zur Ermittlung eines Anzeigebildes über eine erste Speichereinrichtung zur Speicherung der Abstandserfassungswerte und auch zur Speicherung von ggf. vorliegenden Wandparametern, wenn bei einzelnen Erfassungslinien bestimmte Grenzwerte des Abstands vom Fahrzeug unterschritten werden.

In einer zweiten Speichereinrichtung sind oder werden die Sensorrandpunkte hinterlegt, die als Begrenzungspunkte bei der Berechnung entsprechender Bezier-Kurven dienen. Zudem ist ein Bezier-Berechnungsmodul zur Berechnung der jeweiligen Bezier-Kurve für eine Gruppe von Erfassungslinien vorgesehen.

Typischerweise ist in dem Anzeigebild zunächst das Fahrzeug von oben gesehen schematisch dargestellt mit einem Erfassungsbereich von Sensoren, der vor bzw. hinter oder auch zusätzlich neben dem Fahrzeug liegt und jeweils insgesamt etwa einen Teil eines Kreisringsektors bildet, der durch eine innere und eine äußere Erfassungsgrenzlinie begrenzt wird. Diesseits und jenseits der Erfassungsgrenzlinie liegende Hindernisse werden durch die Wandler nicht erfasst und in dem Anzeigesystem nicht dargestellt.

Die durch das erfindungsgemäße Verfahren erzeugte Bezier-Kurve stellt innerhalb des beschriebenen Kreissektors in diesen hineinragende Gegenstände bzw. Hindernisse dar.

Durch die Erfindung sollen etwaige entstehende Stufen bzw. Ungenauigkeiten, die durch die Zahl der Sensoren bzw. Erfassungslinien entstehen, so unauffällig wie möglich gehalten werden, um die Kontur eines Hindernisses möglichst glatt und realistisch darzustellen.

Zu diesem Zweck sieht eine vorteilhafte Ausgestaltung der Erfindung vor, dass, wenn wenigstens drei benachbarten Erfassungslinien zugeordnete Objektpositionen unter Berücksichtigung von bestimmten Maximalabweichungen auf einer Geraden liegen, den jeweiligen Erfassungslinien je ein Wandparameter (wall flag) zugeordnet wird, dass geprüft wird, ob benachbarten Erfassungslinien je ein Wandparameter zugeordnet ist und dass in diesem Fall die beiden den entsprechenden Erfassungslinien zugeordneten Objektpositionen durch eine gerade Linie miteinander verbunden werden oder die den Objektpositionen zugeordneten Stützstellen direkt auf der jeweiligen Erfassungslinie angeordnet werden.

Dem geschilderten Vorgehen liegt der Gedanke zugrunde, dass beim Setzen eines Wall Flags, d.h. wenn auf drei benachbarten Erfassungslinien Objektpositionen ermittelt werden und diese in etwa auf einer Geraden liegen, eine möglichst gerade durchgehende Linie erzeugt werden sollte. Ein derartiges Objekt wird am besten durch eine gerade Verbindung zwischen je zwei oder allen Objektpositionen dargestellt oder durch eine Variante der Bezierkurve, bei der die Objekt- Stützstellen in dem genannten Bereich direkt auf die jeweilige Erfassungslinie oder in ihre unmittelbare Nähe, insbesondere auf die Objektposition, gelegt werden. Der Rest der Bezier-Kurve wird nach den üblichen Regeln vervollständigt. Hierdurch wird beispielsweise beim Heranfahren an eine Wand oder Einfahren in eine Garage ein realistisches Anzeigebild der geraden Wände erzeugt.

Zur Ergänzung ist weiterhin vorteilhaft vorgesehen, dass in dem Fall, dass bei einer äußeren seitlichen Erfassungslinie ein Wandparameter gesetzt ist, zur realistischen Ermittlung des Anzeigebildes außen neben der äußeren seitlichen Erfassungslinie eine zusätzliche virtuelle Seitenerfassungslinie erzeugt wird, der eine virtuelle Objektposition und ein Wandparameter zugeordnet wird.

Unter einer äußeren seitlichen Erfassungslinie ist eine derartige Erfassungslinie zu verstehen, die jeweils auf die Umgebung des Fahrzeugs im vorderen seitlichen Bereich gerichtet ist, wo auch Objekte dargestellt werden, an denen das Fahrzeug sich nahe vorbeibewegt.

Fährt man nun nahe an einer Wand vorbei, so würde allein durch das Setzen eines Wandparameters bei der äußeren seitlichen Erfassungslinie noch keine glatte Kontur dargestellt. Dies kann aber durch das zusätzliche Erzeugen einer virtuellen Seitenerfassungslinie mit einer entsprechenden virtuellen Objektposition und einem Wandparameter erreicht werden, der die entsprechende Bezier-Kurve um einen Objektpunkt bereichert und auch einen Kurvenrandpunkt nach Maßgabe der virtuellen Seitenerfassungslinie erzeugt. Entsprechend können die Objekt- Stützstellen der virtuellen Objektposition mit dieser zusammengelegt werden.

Auf diese Weise ist das realistische Abbild einer seitlich neben dem Fahrzeug verlaufenden geraden Wand erreichbar.

Dies kann noch weiter dadurch verbessert werden, dass auch bei der der äußeren seitlichen Erfassungslinie innen benachbarten Erfassungslinie ein Wandparameter gesetzt wird.

Eine weitere vorteilhafte Ausgestaltung der Erfindung sieht vor, dass in dem Fall, dass bei mehr als zwei unmittelbar benachbarten Erfassungslinien jeweils ein Wandparameter gesetzt ist, die beiden äußeren Objektpositionen, für die Wandparameter gesetzt sind, bei der Ermittlung des Anzeigebildes berücksichtigt werden und wenigstens eine der übrigen Objektpositionen zwischen den beiden äußeren Objektpositionen unberücksichtigt bleibt.

Es hat sich gezeigt, dass bei großen und ausladenden Hindernissen, die sich in der Nähe des Fahrzeugs befinden, die Darstellung durch gerade Linien zumindest in Teilbereichen der Bezier-Kurve die Gesamtdarstellung verbessert. Es werden damit glattere Konturen geschaffen als dies durch Berechnungen einer Bezier-Kurve mit allen Kurvenpunkten unter den gegebenen Umständen erreichbar wäre.

Die Anwendung dieser Regel sollte jedoch auf die Erfassungslinien mit Ausnahme der äußeren seitlichen Erfassungslinien beschränkt bleiben.

Zudem kann das Anzeigebild dadurch verbessert werden, das wenn der Abstandserfassungswert einer Erfassungslinie kleiner ist als der Abstand der Erfassungswert der dieser benachbarten Erfassungslinie und die Differenz einen gegebenen Schwellwert übersteigt, der Abstandserfassungswert der benachbarten Erfassungslinie entfernt wird, wobei der entsprechende Sensorrandpunkt unverändert bleibt.

Liegt eine Objektposition sehr nahe am Fahrzeug und direkt benachbart auf der nächsten Erfassungslinie eine Objektposition mit großem Abstand dazu, so würde sich eine stark stufige, unregelmäßige Kontur ausbilden, die durch Streichen der erfassten Objektposition, die einem größeren Abstand vom Fahrzeug entspricht, vermieden werden kann. Dabei bleibt jedoch der Kurvenrandpunkt als Sensorrandpunkt derjenigen Erfassungslinie, auf der die Objektposition gestrichen wurde, erhalten.

Auch diese Regel sollte vorteilhaft nur auf die Erfassungslinien mit Ausnahme der äußeren Erfassungslinien beschränkt bleiben.

Vorteilhaft kann auch der Sensorerfassungswinkel einer Erfassungslinie in Abhängigkeit von vorliegenden Abstandserfassungswerten festgelegt werden.

Dabei können die Sensorerfassungswinkel individuell festgelegt sein, jedoch auch für alle Erfassungslinien gemeinsam.

Es kann der Sensorerfassungswinkel von dem Betrag der Differenz der vorliegenden Abstanderfassungswerte, insbesondere vom Betrag der Differenz zweier benachbarter Abstandserfassungswerte abhängig gewählt werden. Dabei ist es vorteilhaft, den Sensorerfassungswinkel individuell oder kollektiv umso kleiner zu wählen, je geringer die Differenz, beispielsweise die durchschnittliche oder die minimale Differenz, der vorliegenden Abstandserfassungswerte ist. Dies kann grundsätzlich auch für Teilgruppen aus der Anzahl der Erfassungslinien gelten.

Durch die genannte Bestimmung der Sensorerfassungswinkel, insbesondere bei großen Differenzen der Abstandserfassungswerte, ist die Bezier-Kurve durch die weit beabstandeten Kurvenrandpunkte abgeflacht, so dass eine glattere Kontur entsteht.

Die Sensorerfassungswinkel beeinflussen die entstehende Bezier-Kurve insofern, als durch diese in ihren Schnittpunkten mit der äußeren, d. h. vom Kraftfahrzeug am weitesten entfernten Erfassungsgrenzlinie des Abstandserfassungsbereichs die jeweiligen Sensorrandpunkte festgelegt sind, wobei die jeweils äußersten Sensorrandpunkte einer Gruppe von Erfassungslinien die Kurvenrandpunkte der Bezier-Kurve bilden.

Eine weitere vorteilhafte Ausgestaltung der Erfindung kann auch vorsehen, dass für jede Erfassungslinie, für die ein Abstandserfassungswert vorliegt, der Abstand der einzelnen Objektstützstellen von der Erfassungslinie in Abhängigkeit von den Abstandserfassungswerten der Erfassungslinie und deren in Richtung der jeweiligen Objektstützstelle benachbarten Erfassungslinie bestimmt wird.

Dieser Gedanke erlaubt, die beiden Objektstützstellen, die jeweils einer Erfassungslinie zugeordnet sind, in unterschiedlichem Abstand von der Erfassungslinie anzuordnen, wobei der Abstand jeweils davon abhängt, wie groß die Differenz der Abstandserfassungswerte der beiden der jeweiligen Objekt-Stützstelle benachbarten Erfassungslinien ist.

Unterscheiden sich die Abstandserfassungswerte benachbarter Erfassungslinien stark, so wäre der Abstand der entsprechenden Objekt-Stützstelle, die zwischen den beiden Erfassungslinien liegt, von der zugeordneten Erfassungslinie sehr groß. Liegt nur eine kleine Differenz der Abstandserfassungswerte vor, so wäre die entsprechende Objekt-Stützstelle relativ nah an der ihr zugeordneten Erfassungslinie angeordnet.

Der Abstand der Objektstützstellen von den ihnen jeweils zugeordneten Erfassungslinien kann dabei proportional zu den genannten Differenzen der Abstandserfassungswerte mit einer für alle Abstände gemeinsamen Proportionalitätskonstanten sein, so dass sich die Berechnung der Objekt-Stützstellen für alle Erfassungslinien insgesamt vereinfacht.

Dabei kann eine Begrenzung bei der Bestimmung der Abstände der Objektstützstellen von der jeweiligen Erfassungslinie durch einen Minimalabstand und einen Maximalabstand vorgesehen sein.

Es kann außerdem vorteilhaft vorgesehen sein, dass die Position der Objektstützstellen entlang der diesen zugeordneten Erfassungslinie auf gleicher Höhe liegt wie die jeweils vorliegende Objektposition.

Hierdurch ergibt sich eine besonders einfache Berechnung der Objektstützstellen mit einer besonders glatten Bezier-Kurve.

Es kann jedoch auch vorgesehen sein, dass bei einer Gruppe von Erfassungslinien die Positionen der Objektstützstellen entlang der diesen zugeordneten Erfassungslinien, ausgehend von der Höhe der jeweiligen Abstandserfassungswerte aneinander angenähert werden.

Dies bedeutet, dass bei benachbarten Erfassungslinien, für die jeweils Objektpositionen vorliegen, die Objekt- Stützstellen entlang ihrer jeweiligen Erfassungslinie nicht auf der Höhe der Objektposition liegen, sondern derart entlang der jeweiligen Erfassungslinie verschoben sind, dass die Höhe der Objektstützstellen verschiedener Erfassungslinien aneinander wenigstens teilweise angeglichen wird. Dabei ist vorausgesetzt, dass die entsprechenden Erfassungslinien in derart spitzem Winkel zueinander verlaufen, dass die Positionen der Objektstützstellen entlang der Erfassungslinien verglichen werden können.

In Gruppen von mehr als zwei Erfassungslinien, die jeweils Objektpositionen aufweisen, können die Höhen der Objektstützstellen entlang der jeweiligen Erfassungslinien einem gemeinsamen Mittelwert angeglichen werden.

Die Erfindung kann in Bezug auf zeitliche Änderungen der Objekterfassung dadurch vorteilhaft ausgestaltet werden, dass das Anzeigebild wiederholt ermittelt wird und dass bei Veränderungen der Abstandserfassungswerte zwischen einem vorliegenden Anzeigebild und einer folgenden Ermittlung bei der Ermittlung nur ein Teil der Differenz zu den Daten des vorliegenden Anzeigebildes berücksichtigt wird.

Dabei kann sich die Situation einerseits durch eine Bewegung des Fahrzeugs, andererseits auch durch Annäherung von Objekten an das Fahrzeug schnell ändern. Aus diesem Grund wird das Anzeigebild wiederholt neu berechnet, wobei die zeitliche Abfolge periodisch, jedoch auch vom Auftreten von Veränderungen abhängig sein kann.

Um Messungenauigkeiten, jedoch auch Fehlmessungen und das Auftreten von sogenannten Phantomobjekten (Vorspiegelung von Hindernissen aufgrund von einzelnen gestörten Messungen) verhindern zu können, wird ein neu berechnetes Anzeigebild bei der Änderung von Messwerten/Abstandserfassungswerten weniger geändert als dies den geänderten Messwerten entsprechen würde. Dies kann beispielsweise durch sogenannte Dämpfungsfaktoren erreicht werden, durch die einem neuen Anzeigebild nicht der neueste Messwert zugrunde gelegt wird, sondern ein Zwischenwert zwischen einem bereits vorher vorhandenen Messwert und einem neuen Messwert. Durch weiter erfolgende neue Berechnungen wird in jedem Schritt der Wert, der dem neu zu berechnenden Bild zugrunde gelegt wird, dem tatsächlichen Messwert angenähert. Auf diese Weise nähern sich die dem aktuellen Anzeigebild zugrunde liegenden Daten asymptotisch den wirklichen Messdaten. Einzelne Ausreißer unter den Messwerten können durch dieses Verfahren weggeglättet werden.

Das Verfahren kann konkret dadurch ausgestaltet werden, dass jeweils die Differenz zwischen dem vorherigen Anzeigebild zugrunde liegenden Daten und dem aktuellen Messwert gebildet wird, diese Differenz mit einem Dämpfungsfaktor kleiner als 1 multipliziert und der entstehende Korrekturwert zu den bisher verwendeten Messdaten addiert wird.

Eine mehrfache Anwendung dieses Schrittes führt asymptotisch zur Berücksichtigung der tatsächlich vorliegenden Messdaten.

Die Erfindung bezieht sich außer auf das beschriebene Verfahren auch auf eine Einrichtung zur Ermittlung eines Anzeigebildes gemäß Patentanspruch 17 und auf ein Fahrassistenzsystem mit einem Sensorsystem zur Erfassung und Ausgabe von Abstandserfassungswerten und gegebenenfalls von Wandparametern sowie mit einer Einrichtung gemäß Patentanspruch 17. Das entsprechende Sensorsystem kann außer den Abstandserfassungswerten auch die Wandparameter bei Unterschreitung der Grenzwerte der einzelnen Erfassungslinien liefern.

Entsprechende Wandparameter können jedoch auch in der Einrichtung zur Ermittlung des Anzeigebildes aus den vorliegenden Abstandserfassungswerten durch Berechnung gewonnen werden. Die Integration dieser Funktion in das Sensorsystem hilft jedoch, Zeit zu sparen und fällige Warnungen bei Verringerung von Objektabständen schneller und weniger fehleranfällig bereitstellen zu können.

Im Folgenden wird die Erfindung anhand eines Ausführungsbeispiels in einer Zeichnung gezeigt und anschließend beschrieben.

Dabei zeigt
- Figur 1: eine Erfassungslinie mit einem Sensorerfassungswinkel, zwei Objektstützstellen und einer Bezier-Kurve,
- Figur 2: eine Mehrzahl von Erfassungslinien mit Objektpositionen und einer durch diese verlaufenden Bezier-Kurve,
- Figur 3: eine virtuelle Seitenerfassungslinie und eine gerade Linie zwischen zwei Objektpositionen,
- Figur 4: mehrere Objektpositionen mit Wall Flags, die durch eine Gerade miteinander verbunden sind,
- Figur 5a - c: mehrere Erfassungslinien mit Objektpositionen und zwei Varianten einer hieraus bestimmten Bezier-Kurve,
- Figur 6a, b: mehrere Erfassungslinien mit Objektpositionen und mehreren hieraus mit verschiedenen Sensorerfassungswinkeln berechneten Bezier-Kurven,
- Figur 7: drei Erfassungslinien mit Objektstützstellen, die unterschiedlich weit von den entsprechenden Erfassungslinien entfernt sind,
- Figur 8a: eine Mehrzahl von Objekt-Stützstellen, die paarweise entlang den Erfassungslinien verschoben werden,

- Figur 8b, c: Objektstützstellen, die einzeln in Abstand und Höhe in bezug auf die jeweilige Erfassungslinie gezielt verschoben werden,
- Figur 9: eine erfindungsgemäße Einrichtung zur Erzeugung eines Anzeigebildes,
- Figur 10a, b: die Zuordnung der Objektpositionen zu dynamisch erzeugten Erfassungslinien und
- Figur 11a, b: einen Mechanismus zum Setzen von wall flags.

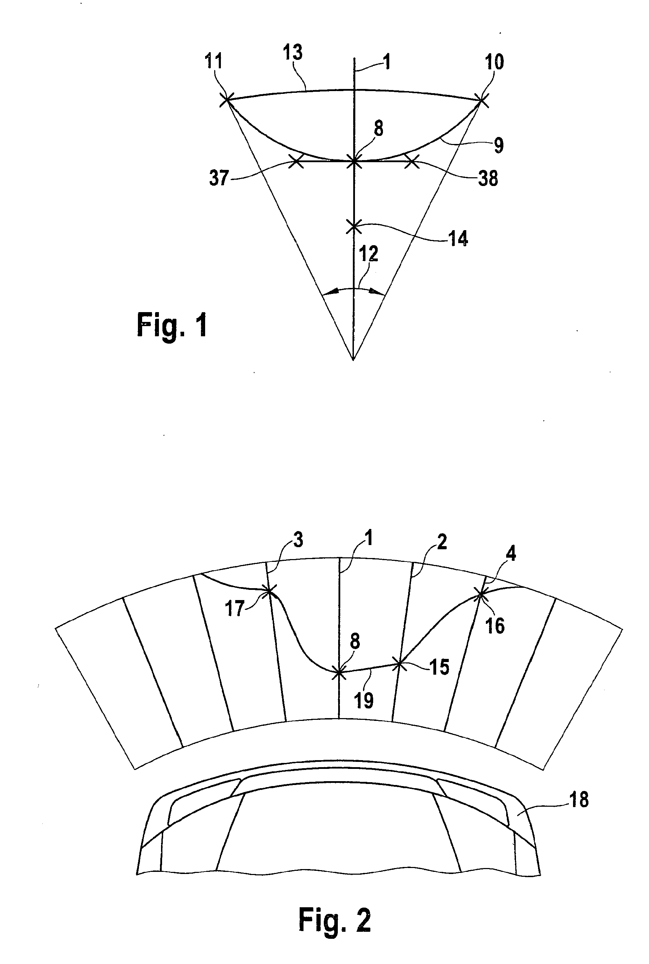

Figur 1 zeigt exemplarisch eine Erfassungslinie 1, die bei einem Fahrzeug beispielsweise die Richtung anzeigen kann, in die ein Sensor zur Erfassung von Gegenständen mit seinem Erfassungskegel ausgerichtet ist.

Es kann jedoch auch vorgesehen sein, dass mittels eines komplexeren Systems, beispielsweise über Kreuzechos, Objektpositionen von erfassten Gegenständen ermittelt werden können. Vorteilhaft kommen zur Anwendung des erfindungsgemäßen Verfahrens Objektpositionen in Betracht, die auf vorher festgelegten Erfassungslinien ermittelt werden, diese können jedoch auch erst im Laufe des Verfahrens aus Objektpositionen ermittelt werden.

Im vorliegenden Fall liegt beispielsweise eine Objektposition 8 vor, deren Koordinaten im System bekannt sind oder beispielsweise aus einem Abstandserfassungswert ermittelt werden können.

Ziel der Erfindung ist es, eine Bezier-Kurve, die mit 9 bezeichnet ist, durch die Objektposition 8 sowie durch die Kurvenrandpunkte 10, 11 zu bestimmen.

Dabei sind die Kurvenrandpunkte 10, 11 durch die Schnittpunkte des Sensorerfassungswinkels 12 mit einer Erfassungsgrenzlinie 13 gegeben. Es können jedoch auch Kurvenrandpunkte außerhalb des Erfassungsbereichs vorgegeben werden.

Der Sensorerfassungswinkel 12 liegt in etwa symmetrisch um die Erfassungslinie 1, ist in der Winkelgröße jedoch unabhängig von der Erfassungsphysik nur durch die Modellbildung bei der Bestimmung einer Bezier-Kurve gegeben. Mit der freien Wahl des Sensorerfassungswinkels 12 kann die Natur der entstehenden Bezier-Kurven - bei größeren Sensorerfassungswinkeln flacher, bei schmaleren Winkeln steiler - vorgegeben werden. Die Sensorerfassungswinkel können beispielsweise für alle Erfassungslinien einer Sensorgruppe gleich sein, jedoch auch individuell gewählt werden.

Die Erfassungsgrenzlinie 13 ist im Wesentlichen durch die Entfernung vom Fahrzeug gegeben, in der Objekte noch erfasst und dargestellt werden sollen.

Außerdem sind zwei Objekt- Stützstellen 37,38 dargestellt, die der Berechnung der Bezierkurve dienen und deren Positionierung zur passenden Gestaltung des Anzeigebildes beiträgt

Des Weiteren ist der Figur 1 ein Grenzwert 14 für Objektpositionen zu entnehmen, der die Entfernung vom Kraftfahrzeug angibt, bei deren Unterschreitung ein Wandparameter (Wall Flag) gesetzt wird. Das Setzen des Wall Flag kann entweder bei der Ermittlung der Objektabstände in den Sensoren oder auch bei der Nachverarbeitung der Messwerte im Rahmen des erfindungsgemäßen Verfahrens geschehen.

Der Verwendung von Wall Flags liegt der Gedanke zugrunde, dass bei größeren Objekten, die von mehreren Sensoren bzw. auf mehreren einander direkt benachbarten Erfassungslinien in annähernd linearer Anordnung nachgewiesen werden, die Wahrscheinlichkeit einer glatten Kontur, wie beispielsweise bei einer Wand, an die das Fahrzeug heranfährt, besonders groß ist, gleichzeitig jedoch Meßfehler auftreten können, die zu einer diskontinuierlichen oder nicht ebenmäßigen Darstellung führen können. Aus diesem Grund sieht das System die Option vor, dass in dem Fall, dass zwei nebeneinander liegende Erfassungslinien entsprechende Objektpositionen mit gesetzten Wandparametern aufweisen, diese Objektpositionen nicht durch eine, meistens geschwungene, Bezier-Kurve miteinander verbunden werden, sondern dass auf diesem Teilstück die Kurve als Gerade fortgesetzt wird. Hierdurch ergibt sich im Allgemeinen ein realistischeres Abbild von dem erfassten Gegenstand.

Dieser Umstand ist genauer in der Figur 2 dargestellt, in der die Erfassungslinien 1, 2, 3, 4 mit entsprechenden Objektpositionen 8, 15, 16, 17 für das Fahrzeug 18 gegeben sind. Wenn die Objektpositionen 8, 15, 16 sich annähernd auf einer geraden Linie befänden, so würden für die Erfassungslinien 1,2 und 4 wall flags gesetzt und es würde die entsprechende Linie zwischen diesen Objektpunkten als Gerade 19 dargestellt oder in diesem Bereich würden die Objekt- Stützstellen auf die Objektposition oder nahe an diese heran gesetzt, was zu einer sehr gestreckten, annähernd geraden Gestaltung der Bezierkurve in diesem Bereich führen würde. In den angrenzenden Bereichen wird die Bezierkurve in jedem Fall fortgesetzt.
Ein solches Vorgehen ist jedoch vorteilhaft erst dann vorgesehen, wenn mehrere, insbesondere mindestens drei auf benachbarten Erfassungslinien angeordnete Objektpositionen vorliegen, für die jeweils Wandparameter gesetzt sind.

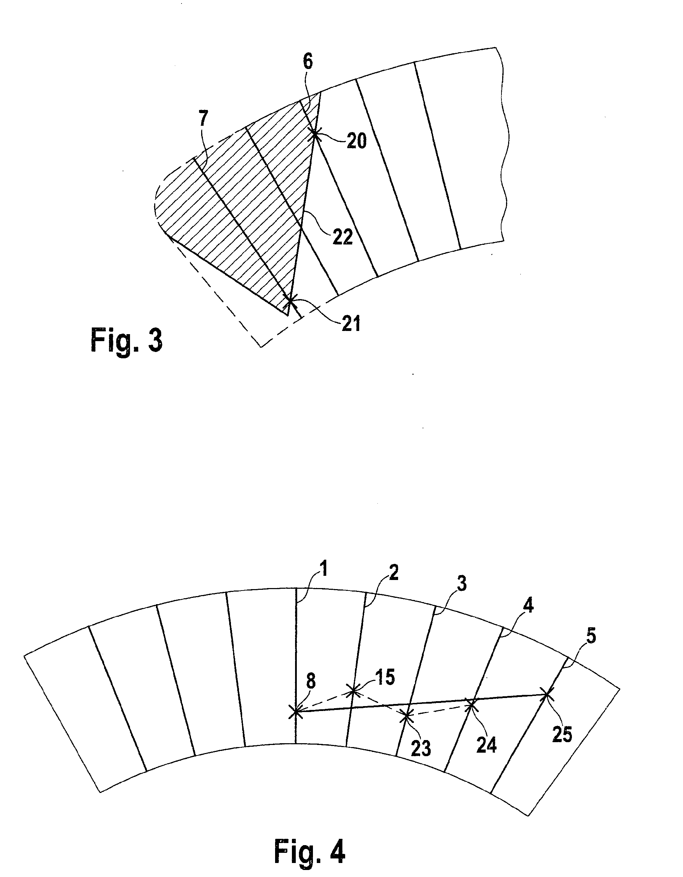

In der Figur 3 ist die Verwendung der Wall Flags im Zusammenhang mit seitlich vor dem Fahrzeug befindlichen Hindernissen, insbesondere Wänden, detaillierter gezeigt. Es ist dort eine äußere seitliche Erfassungslinie 6 dargestellt mit einer Objektposition 20, die einen entsprechenden Grenzwert unterschreitet, so dass dort ein Wall Flag gesetzt ist.

Um unter Verwendung des erfindungsgemäßen Verfahrens eine gerade Linie darzustellen, ist für diesen speziellen Fall die Möglichkeit vorgesehen, eine zusätzliche, virtuelle Seitenerfassungslinie 7 zu schaffen, der keine Objekterfassung im System entspricht. Auf der virtuellen Seitenerfassungslinie 7 ist eine Objektposition 21 angenommen und in jedem Fall ist ein Wall Flag gesetzt, was dazu führt, dass die Objektpositionen 20 und 21 durch eine gerade Strecke miteinander verbunden werden. Die Objektposition 21 kann individuell so gewählt werden, dass die Verbindungsgerade 22 die gewünschte Richtung, beispielsweise parallel zum Fahrzeug aufweist oder es kann auch eine Standardposition angenommen werden.

Auf diese Weise kann die in der Figur schraffiert eingezeichnete Fläche eingefärbt werden, so dass beim Betrachten des Anzeigebildes auf der linken vorderen Seite des Fahrzeugs die Darstellung einer Wand entsteht.

Zudem kann auf der nächsten benachbarten Erfassungslinie ebenfalls zwangsweise ein Wall Flag gesetzt werden, um auch dort mit einer passenden Objektposition die gerade Verbindung zur Objektposition 20 zu schaffen und damit das Bild weiter zu verbessern. In der Figur 4 ist dargestellt, dass bei einer Mehrzahl von Objektpositionen 8, 15, 23, 24, 25, für die jeweils ein Wall Flag gesetzt ist, nach einer Ausgestaltung der Erfindung nicht alle Objektpositionen durch gerade Strecken jeweils paarweise untereinander verbunden werden (gestrichelte Ausführung), sondern in diesem Fall eine oder mehrere der Objektpositionen zwischen den äußersten Objektpositionen mit Wall Flag, im vorliegenden Fall 8 und 25, vernachlässigt und nur die äußeren mittels einer geraden Strecke verbunden werden können. Dadurch entsteht eine klare Kontur eines angezeigten Gegenstandes im Erfassungsfeld.

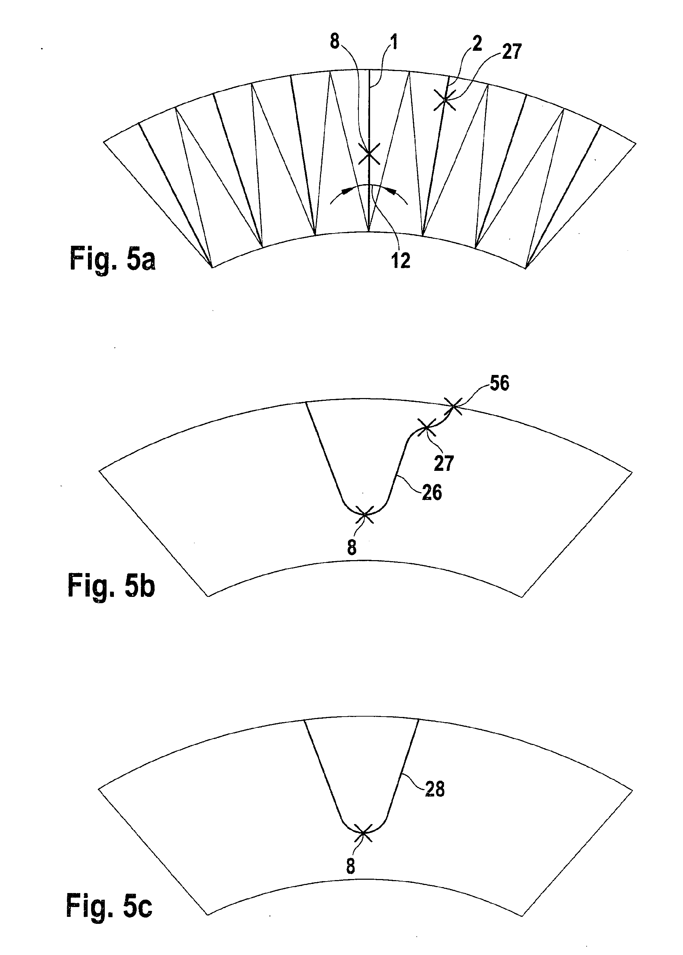

Die Figuren 5a - c zeigen bei einer Mehrzahl von Erfassungslinien 1, 2 die jeweils diesen zugeordneten Sensorerfassungswinkel 12 und erfasste Objektpositionen 8, 27 sowie einen Kurvenrandpunkt 56.

Es sind die beiden Varianten dargestellt, dass im mittleren Teil der Figur die Bezier-Kurve 26 unter Berücksichtigung aller Objektpositionen 8, 27 berechnet ist, sowie im unteren Teil der Figur die Bezier-Kurve 28, bei der die Kurvenrandpunkte ebenso gewählt sind wie bei der Bezier-Kurve 26, nämlich als Sensorrandpunkte der entsprechenden Erfassungslinien 1, 2, wobei jedoch wegen der großen Differenz der Abstandserfassungswerte der Objektpositionen 8, 27 der am Rand liegende und weiter entfernte Punkt 27 bei der Berechnung der Bezier-Kurve unberücksichtigt bleibt. Die sich ergebende Bezier-Kurve 28 wirkt durch die geglättete Kontur überzeugender und ist im Hinblick auf den Informationsgehalt des Anzeigebildes ohne Nachteile vereinfacht.

Ein solches Vorgehen bietet sich an, wenn die Differenz der Abstandserfassungswerte zweier benachbarter Objektpositionen 8,27 einen bestimmten Schwellwert überschreitet.

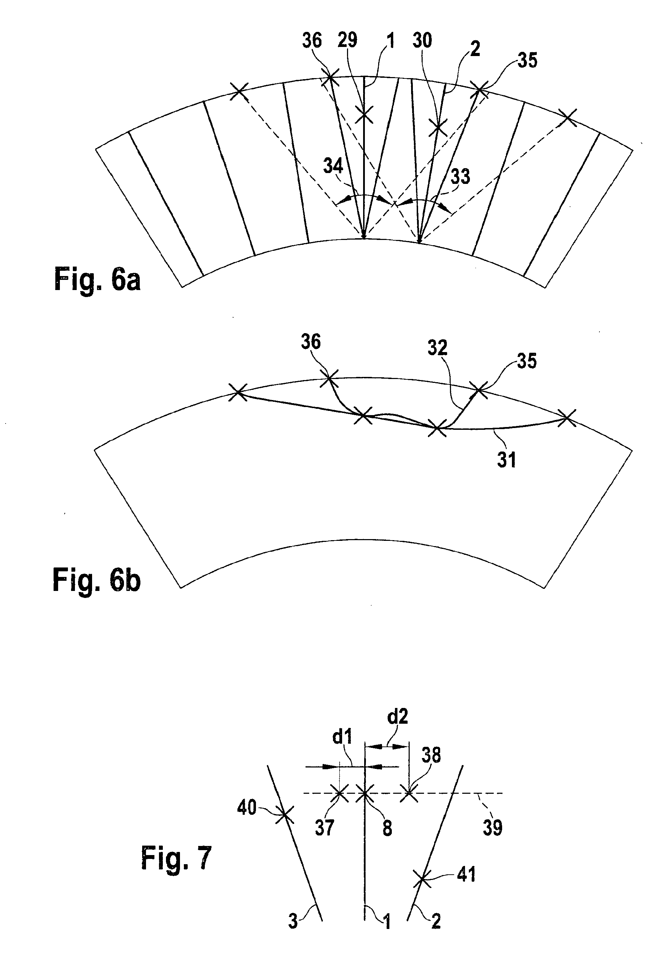

Die Figuren 6a, b zeigen zwei Erfassungslinien 1, 2 mit Objektpositionen 29, 30 und zwei Varianten 31, 32 der bestimmten Bezier-Kurve in Abhängigkeit von den zugrunde gelegten Sensorerfassungswinkeln. Bei der Bestimmung der Bezier-Kurve 31 ist ein weiterer Sensorerfassungswinkel - in der Figur gestrichelt und mit den Bezugszeichen 33, 34 bezeichnet - zugrunde gelegt, während bei der Bezier-Kurve 32 jeweils ein engerer Sensorerfassungswinkel mit den Kurvenrandpunkten 35, 36 zugrunde gelegt ist. Auf diese Weise kann durch die geeignete Wahl der Sensorerfassungswinkel die Natur der erzeugten Bezier-Kurve bestimmt werden.

In der Figur 7 ist für die Erfassungslinie 1 mit einer Objektposition 8 die Bestimmung der Objektstützstellen 37, 38 dargestellt, wobei die Abstände d1, d2 von der Erfassungslinie 1 grundsätzlich gleich sein können. Die Objektstützstellen können auf einer Orthogonalen 39 zur Erfassungslinie 1 angeordnet sein. Vorteilhaft kann in manchen Situationen sein, dass die Abstände d1, d2 sich unter Berücksichtigung der Objektpositionen 40, 41 benachbarter Erfassungslinien 2, 3 bestimmen, wobei d1, d2 proportional zur Differenz entsprechender Abstandserfassungswerte auf der jeweiligen Seite der Erfassungslinie 1 mit einem vorgegebenen Proportionalitätsfaktor sein können. Auch hierdurch kann unter bestimmten Bedingungen die Gestalt der Bezier-Kurve verbessert werden.

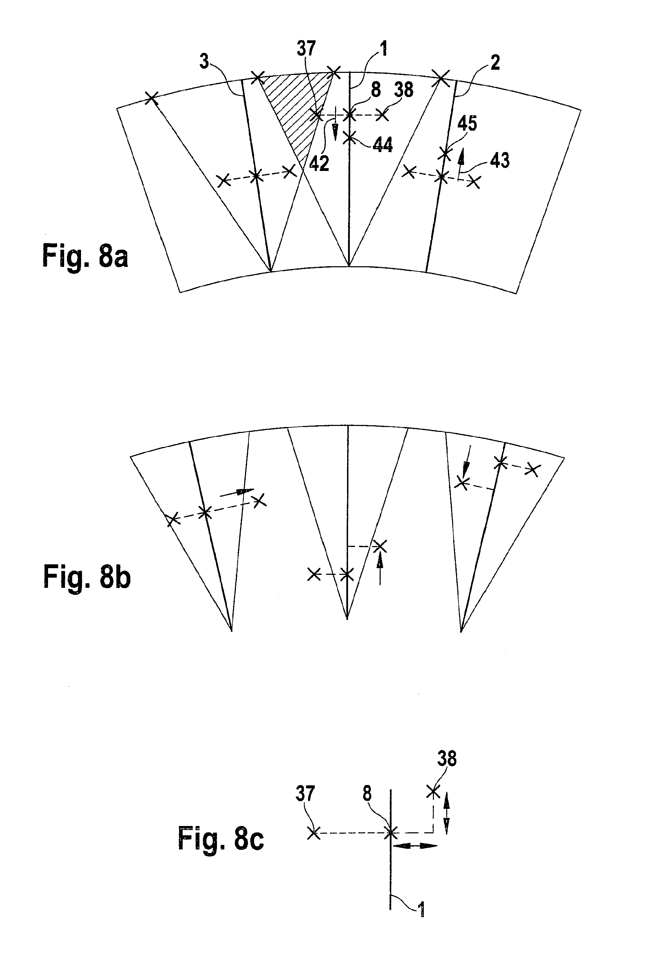

In Figur 8a ist dargestellt, dass auch die Höhe der Objektstützstellen 37, 38 entlang der Erfassungslinie 1 unter Berücksichtigung der Abstandserfassungswerte der Erfassungslinien 1, 2 verändert werden kann. In der Figur ist durch die Pfeile 42, 43 angezeigt, dass die entsprechenden Objektstützstellen auf die Höhe der jeweils angezeigten Punkte 44, 45 verschoben und damit für benachbarte Erfassungslinien 1, 2 aneinander angenähert werden können.

Die Objektpositionen, durch die die entstehende Bezier-Kurve verläuft, bleiben damit unverändert, lediglich die Objektstützstellen werden verschoben. In den Figuren 8b, c ist auch gezeigt, dass die entsprechenden Sensorerfassungswinkel so groß gewählt werden können, dass sie einander - sichtbar in dem schraffierten Bereich - überschneiden. In den Figuren 8b, c ist zusätzlich im unteren Bereich dargestellt, dass auch einzelne Stützpunkte entlang der jeweiligen Erfassungslinie(in der Höhe) und/oder in ihrem Abstand senkrecht zu der jeweiligen Erfassungslinie gezielt verschoben werden können. Es sind mögliche Verteilungen von Stützstellen im oberen Bereich der Figur gezeigt.

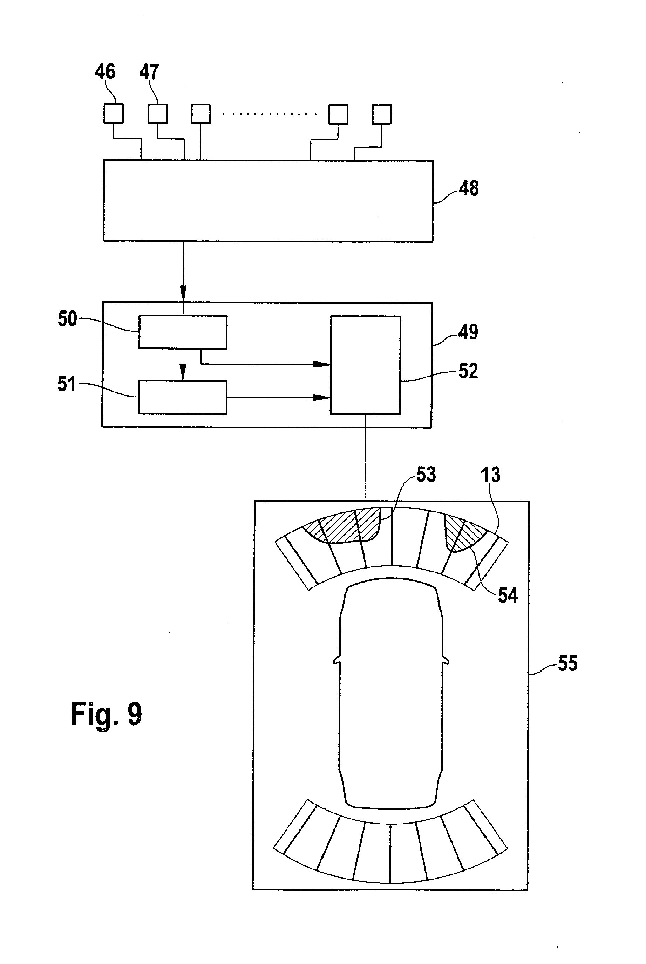

In der Figur 9 ist beispielhaft ein komplettes Fahrassistenzsystem mit einer Einrichtung zur Durchführung des erfindungsgemäßen Verfahrens, d. h. zur Erzeugung eines Anzeigebildes dargestellt.

Es sind physikalische Sensoren 46, 47 dargestellt, mittels deren mit einem Sensorsystem 48 Objektpositionen bestimmt werden, die auf den gegebenen Erfassungslinien 1, 2, 3, 4, 5, 6, liegen. Zudem können in dem System auch entsprechende Wandparameter gesetzt werden. Die ermittelten Werte werden an die Einrichtung 49 zur Durchführung des Verfahrens gegeben, wo in einer ersten Speichereinrichtung 50 die Objektpositionen bzw. Abstandserfassungswerte und in einer zweiten Speichereinrichtung 51 Sensorrandpunkte gespeichert werden. Unter Berücksichtigung einer oder mehrerer Regeln, mit denen die Erfindung vorteilhaft ausgestaltet werden kann, wird in einem Bezier-Berechnungsmodul 52 eine oder mehrere Bezier-Kurven 53, 54 bestimmt, die in das Anzeigebild 55 integriert werden. Die jeweiligen Bezier-Kurven 53, 54 werden jeweils durch eine Erfassungsgrenzlinie 13 geschlossen, so dass geschlossene und mittels eines einfachen Graphikprogramms einfärbbare, in der Figur schraffiert dargestellte Flächen entstehen, die für einen Fahrer das Erkennen von Hindernissen im Erfassungsbereich des Fahrassistenzsystems erlauben.

Die Berechnungseinheit ist wahlweise in verschiedene Systeme integrierbar. Sie kann Teil des Sensorsystems, Teil des Anzeigesystems oder auch eine separate Einheit sein.

Entsprechende Systeme können sowohl für den Bereich vor dem Fahrzeug als auch hinter dem Fahrzeug vorgesehen sein.

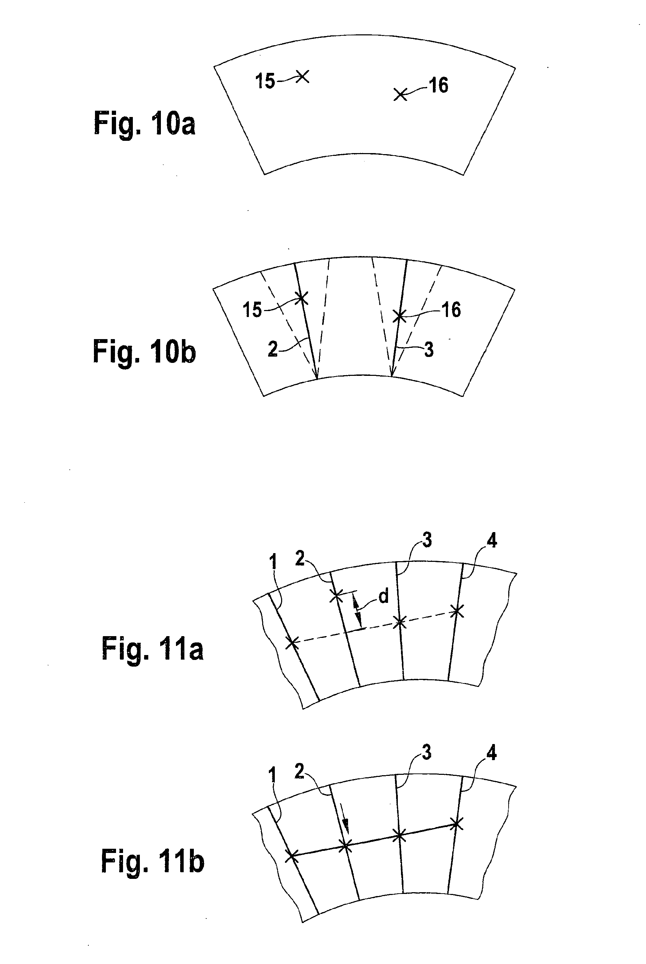

In den Figuren 10a, b sind im oberen Teil zwei erfasste Objektpositionen 15, 16 dargestellt, die dazu verwendet werden können, dynamisch Erfassungslinien 2,3 zu erzeugen, auf denen diese Objektpositionen liegen. Auf diesen so erzeugten Daten kann dann das weitere Verfahren aufbauen durch die Festlegung von Erfassungswinkeln, Stützpunkten und weiteren Parametern.

Die Figuren 11a, b zeigen ein Verfahren zum Setzen von Wandparametern (wall flags), bei dem zunächst festgestellt wird, ob sich durch wenigstens drei Objektpositionen benachbarter Erfassungslinien eine Gerade legen lässt. Dabei kann auf lineare Regression oder auf den Vergleich von Winkelabweichungen bei der Verbindung von verschiedenen Objekt- Positionspaaren abgestellt und das Vorliegen einer Geraden angenommen werden, wenn die Abeichung d von Objektpositionen von einer Ausgleichsgeraden unter einem bestimmten festlegbaren Schwellwert bleibt.
In diesem Fall können allen entsprechenden Objektpositionen/Erfassungslinien Wandparameter zugeordnet werden. Die Objektpositionen können dann jeweils abschnittsweise oder insgesamt durch eine gerade Linie verbunden werden oder die entsprechenden Objekt- Stützpunkte werden ohne Abstand auf die Erfassungslinien gelegt, insbesondere auf die Objektpositionspunkte selbst, um danach eine Bezierkurve zu berechnen. Durch die genannte Positionierung der Stützstellen wird die entstehende Bezierkurve in diesem Bereich eine sehr gestreckte, annähernd gerade Form annehmen.

Das erfindungsgemäße Verfahren ist derart vorbereitet, dass es für wechselnde Konfigurationen, insbesondere wechselnde Anzahlen von Erfassungslinien ohne manuelle Parametrisierung einsetzbar ist.

### Bezugszeichenliste

| | |
|---|---|
| 1, 2, 3, 4, 5,6 | Erfassungslinien |
| 7 | Virtuelle Seitenerfassungslinie |
| 8 | Objektposition, Abstandserfassungswert |
| 9 | Bezier- Kurve |
| 10,11 | Sensorrandpunkte |
| 12 | Sensorerfassungswinkel |
| 13 | Erfassungsgrenzlinie |
| 14 | Grenzwert |
| 15,16,17 | Objektpositionen, Abstandserfassungswerte |
| 18 | Fahrzeug |
| 19,22 | Gerades Kurvenstück |
| 20,21,23,24,25,27 29,30,40,41 | Objektpositionen, Abstandserfassungswerte |
| 26,28,31,32 | Bezier- Kurven |
| 33,34 | Sensorerfassungswinkel |
| 35,36 | Kurvenrandpunkte |
| 37,38 | Objekt- Stützstellen |
| d1,d2 | Abstände |
| 39 | Orthogonale |
| 42,43 | Pfeile |
| 44,45 | Punkte, Höhe der Opjektstützpunkte |
| 46,47 | Sensoren |
| 48 | Sensorsystem |
| 49 | Einrichtung zur Durchführung des Verfahrens |
| 50,51 52 | Speichereinrichtungen Bezier- Berechnungsmodul |
| 53,54 | Bezier- Kurven |
| 55 | Anzeigebild |
| 56 | Kurvenrandpunkt |

## Patentansprüche

1. Verfahren zur Ermittlung eines Anzeigebildes (55) für ein Fahrassistenzsystems eines Kraftfahrzeuges aus einer Mehrzahl von Abstandserfassungswerten unter Verwendung von wenigstens einer Bezier-Kurve (9,26,28,31,32) zur Darstellung von erfassten Objekten, wobei die Abstandserfassungswerte einzelnen Erfassungslinien (1,2,3,4,5,6) zugeordnet sind, wobei aus gegebenen Sensorpositionen, von diesen ausgehenden Erfassungslinien und Abstandserfassungswerten Objektpositionen (8,15,16,17,29,30) von erfassten Objekten ermittelt werden, benachbarte Erfassungslinien, auf denen Objektpositionen vorliegen, zu Gruppen zusammengefasst werden, für jede Erfassungslinie, auf der eine Objektposition vorliegt, eine erste und zweite Objekt-Stützstelle (37,38) auf je einer Seite der Erfassungslinie und auf einer gemeinsamen Orthogonalen (39)der Erfassungslinie festgelegt werden, jeder Sensorlinie ein Sensorerfassungswinkel (12,33,34) zugeordnet ist, dessen Schenkel eine Erfassungsgrenzlinie (13) in Sensorrandpunkten (10,11)schneiden und für jede Gruppe eine Bezier-Kurve bestimmt wird, die durch die Objektpositionen verläuft sowie an Kurvenrandpunkten endet, die die beiden äußeren Sensorrandpunkte der Gruppe bilden, wobei die Stützstellen der Bezier-Kurve einer Gruppe durch die Objekt-Stützstellen (37,38) der Gruppe gebildet sind.

2. Verfahren nach Anspruch 1,
**dadurch gekennzeichnet, dass**
wenn wenigstens drei benachbarten Erfassungslinien (1,2,3,4,5,6) zugeordnete Objektpositionen unter Berücksichtigung von bestimmten Maximalabweichungen (d) auf einer Geraden liegen, den jeweiligen Erfassungslinien je ein Wandparameter (wall flag) zugeordnet wird, dass geprüft wird, ob benachbarten Erfassungslinien je ein Wandparameter zugeordnet ist und dass in diesem Fall die beiden den entsprechenden Erfassungslinien zugeordneten Objektpositionen (8,15,20,21) durch eine gerade Linie (19,22) miteinander verbunden werden oder die den Objektpositionen zugeordneten Stützstellen direkt auf der jeweiligen Erfassungslinie angeordnet werden.

3. Verfahren nach Anspruch 2,
**dadurch gekennzeichnet, dass**
in dem Fall, dass bei einer äußeren seitlichen Erfassungslinie (6) ein Wandparameter gesetzt ist, zur Ermittlung des Anzeigebildes (55) außen neben der äußeren seitlichen Erfassungslinie eine zusätzliche virtuelle Seitenerfassungslinie (7) erzeugt wird, der eine virtuelle Objektposition (21) und ein Wandparameter zugeordnet wird.

4. Verfahren nach Anspruch 3,
**dadurch gekennzeichnet, dass**
auch bei der der äußeren seitlichen Erfassungslinie (6) innen benachbarten Erfassungslinie ein Wandparameter gesetzt wird.

5. Verfahren nach Anspruch 2 oder einem der folgenden,
**dadurch gekennzeichnet, dass**
in dem Fall, dass bei mehr als zwei unmittelbar benachbarten Erfassungslinien (1,2,3,4) jeweils ein Wandparameter gesetzt ist, die beiden äußeren Objektpositionen (8,24), für die Wandparameter gesetzt sind, bei der Ermittlung des Anzeigebildes berücksichtigt werden und wenigstens eine der übrigen Objektpositionen (15,23) zwischen den beiden äußeren Objektpositionen unberücksichtigt bleibt.

6. Verfahren nach Anspruch 1 oder einem der folgenden,
**dadurch gekennzeichnet, dass,**
wenn der Abstandserfassungswert (8) einer Erfassungslinie (1) kleiner ist als der Abstandserfassungswert (27) der dieser benachbarten Erfassungslinie (2) und die Differenz einen gegebenen Schwellwert übersteigt, der Abstandserfassungswert (27) der benachbarten Erfassungslinie entfernt wird, wobei der entsprechende Kurvenrandpunkt (56) unverändert bleibt.

7. Verfahren nach Anspruch 5 oder 6,
**dadurch gekennzeichnet, dass**
die Anwendung auf die Erfassungslinien mit Ausnahme der äußeren Erfassungslinien beschränkt ist.

8. Verfahren nach Anspruch 1 oder einem der folgenden,
**dadurch gekennzeichnet, dass**
ein Sensorerfassungswinkel(12,33,34) in Abhängigkeit von vorliegenden Abstandserfassungswerten festgelegt wird.

9. Verfahren nach Anspruch 8,
**dadurch gekennzeichnet, dass**
die Sensorerfassungswinkel (12,33,34) von zwei benachbarten Erfassungslinien, für die Abstandserfassungswerte vorliegen, in Abhängigkeit vom Betrag der Differenz der vorliegenden Abstandserfassungswerte festgelegt werden.

10. Verfahren nach Anspruch 9,
**dadurch gekennzeichnet, dass**
die Sensorerfassungswinkel (12,33,34) umso kleiner gewählt werden, je geringer die Differenz der vorliegenden Abstandserfassungswerte ist.

11. Verfahren nach Anspruch 8 oder einem der folgenden,
**dadurch gekennzeichnet, dass**
alle Sensorerfassungswinkel(12,33,34) gleich groß festgelegt werden.

12. Verfahren nach Anspruch 1 oder einem der folgenden,
**dadurch gekennzeichnet, dass**
für jede Erfassungslinie (1,2,3), für die ein Abstandserfassungswert (8,40,41) vorliegt, der Abstand (d1,d2) der einzelnen Objektstützstellen (37,38) von der Erfassungslinie (1) in Abhängigkeit von den Abstandserfassungswerten der Erfassungslinie und deren in Richtung der jeweiligen Objektstützstelle benachbarten Erfassungslinie (2,3) bestimmt wird.

13. Verfahren nach Anspruch 12,
**dadurch gekennzeichnet, dass**
der Abstand (d1,d2) einer Objekt-Stützstelle von der jeweiligen Erfassungslinie(1) proportional zur Differenz der Abstandswerte der beiden benachbarten Erfassungslinien (2,3) mit einer für alle Abstände gemeinsamen Proportionalitätskonstanten ist.

14. Verfahren nach Anspruch 1 oder einem der folgenden,
**dadurch gekennzeichnet, dass**
die Position der Objekt-Stützstellen (37,38) entlang der diesen zugeordneten Erfassungslinie (1) auf gleicher Höhe liegt wie die jeweils vorliegende Objektposition (8).

15. Verfahren nach Anspruch 1 oder einem der folgenden,
**dadurch gekennzeichnet, dass**
bei einer Gruppe von Erfassungslinien (1,2,3) die Position der Objektstützstellen entlang der diesen zugeordneten Erfassungslinien, ausgehend von der Höhe der jeweiligen Abstandserfassungswerte aneinander angenähert werden.

16. Verfahren nach Anspruch 1 oder einem der folgenden,
**dadurch gekennzeichnet, dass**
das Anzeigebild (55) wiederholt ermittelt wird und dass bei Veränderungen der Abstandserfassungswerte zwischen einem vorliegenden Anzeigebild und einer folgenden Ermittlung bei der Ermittlung nur ein Teil der Differenz zu den Daten des vorliegenden Anzeigebildes berücksichtigt wird.
